# EUROPEAN PATENT APPLICATION

(11) **EP 4 339 435 A1**
(43) Date of publication of application: **20.03.2024**
(21) Application number: 23197783.6
(22) Date of filing: 15.09.2023
(51) Int. Cl.: F02C 7/042, B64D 33/02

(54) **AIRCRAFT PROPULSION SYSTEM WITH VARIABLE AREA INLET**

(30) Priority: 15.09.2022 US 202263406930 P
(71) Applicant: Rohr, Inc., Chula Vista, CA 91910-2098 (US)
(72) Inventor: GHANDOUR, Imad, San Diego, 92122 (US); GORMLEY, Timothy, Bonita, 91902 (US)
(74) Representative: Dehns

(57) **Abstract**

An assembly for an aircraft includes a variable area inlet (72) for an aircraft propulsion system (20). The variable area inlet (72) includes an inlet structure (74), an inlet door (76), an inner inlet passage (78) and an outer inlet passage (80). The inlet door (76) is configured to move outward from a closed position to an open position. The inlet door (76) is configured to close the outer inlet passage (80) when the inlet door (76) is in the closed position. The inlet door (76) is configured to open the outer inlet passage (80) when the inlet door (76) is in the open position. The inner inlet passage (78) extends into the variable area inlet (72) from a leading edge (86) of the inlet structure (74). The outer inlet passage (80) extends into the inlet structure (74) to the inner inlet passage (78).

## Description

This application claims priority to U.S. Provisional Patent Application No. 63/406,930 filed September 15, 2023.

### TECHNICAL FIELD

This disclosure relates generally to an aircraft propulsion system and, more particularly, to an inlet for the aircraft propulsion system with a variable airflow inlet area.

### BACKGROUND

An aircraft propulsion system may include an inlet structure and a gas turbine engine. The inlet structure directs air into the gas turbine engine. Some known inlet structures include a variable airflow inlet area for tailoring a mass flow of the air entering the gas turbine engine. While these known inlet structures have various advantages, there is still room in the art for improvement. There is a need in the art therefore for an improved inlet assembly with a variable airflow inlet area.

### SUMMARY

According to an aspect of the present disclosure, an assembly is provided for an aircraft. This assembly includes a variable area inlet for an aircraft propulsion system. The variable area inlet includes an inlet structure, an inlet door, an inner inlet passage and an outer inlet passage. The inlet door is configured to move outward from a closed position to an open position. The inlet door is configured to close the outer inlet passage when the inlet door is in the closed position. The inlet door is configured to open the outer inlet passage when the inlet door is in the open position. The inner inlet passage extends into the variable area inlet from a leading edge of the inlet structure. The outer inlet passage extends into the inlet structure to the inner inlet passage.

According to another aspect of the present disclosure, another assembly is provided for an aircraft. This assembly includes a variable area inlet for an aircraft propulsion system. The variable area inlet includes an inlet structure, an inlet door, an inner inlet passage and an outer inlet passage. The inlet door is configured to pivot between a closed position and an open position. The inlet door is configured to close the outer inlet passage when the inlet door is in the closed position. The inlet door is configured to open the second inlet passage when the inlet door is in the open position. The inner inlet passage extends into the variable area inlet from a leading edge of the inlet structure. The outer inlet passage extends into the inlet structure to the inner inlet passage.

According to another aspect of the present disclosure, another assembly is provided for an aircraft. This assembly includes a variable area inlet for an aircraft propulsion system. The variable area inlet includes an inlet structure, an inlet door, an inner inlet passage and an outer inlet passage. The inlet door is configured to move outward from a closed position to an open position. The inlet door is configured to close the outer inlet passage when the inlet door is in the closed position. The inlet door is configured to open the second inlet passage when the inlet door is in the open position. The inner inlet passage extends axially into the variable area inlet. The outer inlet passage extends radially into the inlet structure.

According to another aspect of the present disclosure, another assembly is provided for an aircraft. This assembly includes an aircraft airframe and an aircraft propulsion system exterior to the aircraft airframe. The aircraft propulsion system includes a variable area inlet. The variable area inlet includes an inlet structure, an inlet door, an inner inlet passage and an outer inlet passage. The inlet door is configured to move outward from a closed position to an open position. The inlet door is configured to close the outer inlet passage when the inlet door is in the closed position. The inlet door is configured to open the outer inlet passage when the inlet door is in the open position. The inner inlet passage extends into the variable area inlet from an end of the variable area inlet. The outer inlet passage extends into the inlet structure from a side of the variable area inlet.

According to another aspect of the present disclosure, another assembly is provided for an aircraft. This assembly includes a variable area inlet for an aircraft propulsion system. The variable area inlet includes an inlet structure, an inlet door, an inner inlet passage and an outer inlet passage. The inlet door is configured to pivot from a closed position to an open position. The inlet door is configured to close the outer inlet passage when the inlet door is in the closed position. The inlet door is configured to open the second inlet passage when the inlet door is in the open position. The inner inlet passage extends axially into the variable area inlet. The outer inlet passage extends radially into the inlet structure. An inlet orifice into the outer inlet passage is axially spaced from an inlet orifice into the inner inlet passage.

According to still another aspect of the present disclosure, another assembly is provided for an aircraft. This assembly includes an aircraft airframe and an aircraft propulsion system exterior to and laterally spaced from the aircraft airframe. The aircraft propulsion system includes a variable area inlet. The variable area inlet includes an inlet structure, an inlet door, an inner inlet passage and an outer inlet passage. The inlet door is configured to move outward from a closed position to an open position. The inlet door is configured to close the outer inlet passage when the inlet door is in the closed position. The inlet door is configured to open the outer inlet passage when the inlet door is in the open position. The inner inlet passage extends into the variable area inlet from an end of the variable area inlet. The outer inlet passage extends into the inlet structure from a side of the variable area inlet.

The inlet door may be spaced downstream and/or aft from an inlet orifice into the inner inlet passage.

The inlet door may be configured to pivot a pivot angle about a pivot axis from the closed position to the open position.

The pivot angle may be an acute angle.

The pivot angle may be greater than zero degrees and less than or equal to ten degrees.

The pivot angle may be greater than ten degrees and less than or equal to twenty degrees.

The pivot angle may be greater than twenty degrees and less than or equal to thirty degrees.

The pivot angle may be greater than thirty degrees and less than or equal to forty-five degrees.

The inlet door may be pivotally mounted to the inlet structure.

The inlet door may be configured to form a scoop that directs air into the outer inlet passage when the inlet door is in the open position.

The inlet door may be downstream and/or aft of the leading edge of the inlet structure.

The inlet door may be configured to: cover an inlet orifice into the outer inlet passage when the inlet door is in the closed position; and/or uncover the inlet orifice when the inlet door is in the open position.

The inlet door may be configured to: plug an inlet orifice into the outer inlet passage when the inlet door is in the closed position; and/or unplug the inlet orifice when the inlet door is in the open position.

An inlet orifice into the inner inlet passage may be formed by the inlet structure at the leading edge of the inlet structure. An inlet orifice into the outer inlet passage may be formed by the inlet structure downstream from the leading edge of the inlet structure.

The inner inlet passage may extend axially into the variable area inlet from the leading edge of the inlet structure.

The outer inlet passage may extend radially into the inlet structure to the inner inlet passage.

The outer inlet passage may extend axially into the inlet structure to the inner inlet passage.

The outer inlet passage may extend radially and/or axially through a sidewall of the inlet structure to the inner inlet passage.

The inner inlet passage may be configured as or otherwise include a bore of the inlet structure. The outer inlet passage may be configured as or otherwise include a port in the inlet structure.

A perimeter of an inlet orifice into the inner inlet passage at the leading edge of the inlet structure may have a circular shape.

A perimeter of an inlet orifice into the inner inlet passage at the leading edge of the inlet structure may have a curvilinear shape.

A perimeter of an inlet orifice into the inner inlet passage at the leading edge of the inlet structure may have a D shape.

A perimeter of an inlet orifice into the inner inlet passage at the leading edge of the inlet structure may have a polygonal shape.

The assembly may also include a gas turbine engine, and the gas turbine engine may include a core flowpath. The core flowpath may be configured to receive air from the inner inlet passage and the outer inlet passage when the inlet door is in the open position.

The assembly may also include a gas turbine engine, and the gas turbine engine may include a bypass flowpath. The bypass flowpath may be configured to receive air from the inner inlet passage and the outer inlet passage when the inlet door is in the open position.

The variable area inlet may also include a second inlet door and a second outer inlet passage. The second inlet door may be configured to move outward from a closed position to an open position. The second inlet door may be configured to close the second outer inlet passage when the second inlet door is in the closed position. The second inlet door may be configured to open the second outer inlet passage when the second inlet door is in the open position. The second outer inlet passage may extend into the inlet structure to the inner inlet passage.

The inlet door and the second inlet door may be aligned along a centerline of the variable area inlet.

The variable area inlet may also include a third inlet door and a third outer inlet passage. The third inlet door may be configured to move outward from a closed position to an open position. The third inlet door may be configured to close the third outer inlet passage when the third inlet door is in the closed position. The third inlet door may be configured to open the third outer inlet passage when the third inlet door is in the open position. The third outer inlet passage may extend into the inlet structure to the inner inlet passage.

The variable area inlet may also include a fourth inlet door and a fourth outer inlet passage. The fourth inlet door may be configured to move outward from a closed position to an open position. The fourth inlet door may be configured to close the fourth outer inlet passage when the fourth inlet door is in the closed position. The fourth inlet door may be configured to open the fourth outer inlet passage when the fourth inlet door is in the open position. The fourth outer inlet passage may extend into the inlet structure to the inner inlet passage.

The inlet door and the second inlet door may be configured to move in unison from the closed positions to the open positions.

The inlet door and the second inlet door may be configured to independently move from the closed positions to the open positions.

The assembly may also include an aircraft airframe. The aircraft propulsion system may be arranged exterior of the aircraft airframe.

The assembly may also include an aircraft airframe. The aircraft propulsion system may be mounted to the aircraft airframe.

The assembly may also include an aircraft airframe. The variable area inlet may be configured discrete from the aircraft airframe.

The assembly may also include an aircraft airframe. The variable area inlet may be spaced from the aircraft airframe.

The assembly may also include an aircraft wing. The aircraft propulsion system may be mounted to the aircraft wing through a pylon.

The assembly may also include an aircraft fuselage. The aircraft propulsion system may be mounted to the aircraft fuselage through a pylon.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system with variable area inlet doors in closed positions.
FIG. 2 is a schematic illustration of the aircraft propulsion system with the variable area inlet doors in open positions.
FIGS. 3A-C are end view illustrations of a variable area inlet with various inner inlet orifice geometries.
FIG. 4 is a cross-sectional illustration of an inlet structure of the variable area inlet, which is shown without the inlet doors for ease of illustration.
FIG. 5 is a side view illustration of the variable area inlet with its inlet doors in the closed positions.
FIG. 6 is a side view illustration of the variable area inlet with its inlet doors in the open positions.
FIGS. 7A and 7B are partial side sectional illustrations of various variable area inlet arrangements.
FIG. 8 is a partial illustration of the aircraft propulsion system mounted to an airframe component.

### DETAILED DESCRIPTION

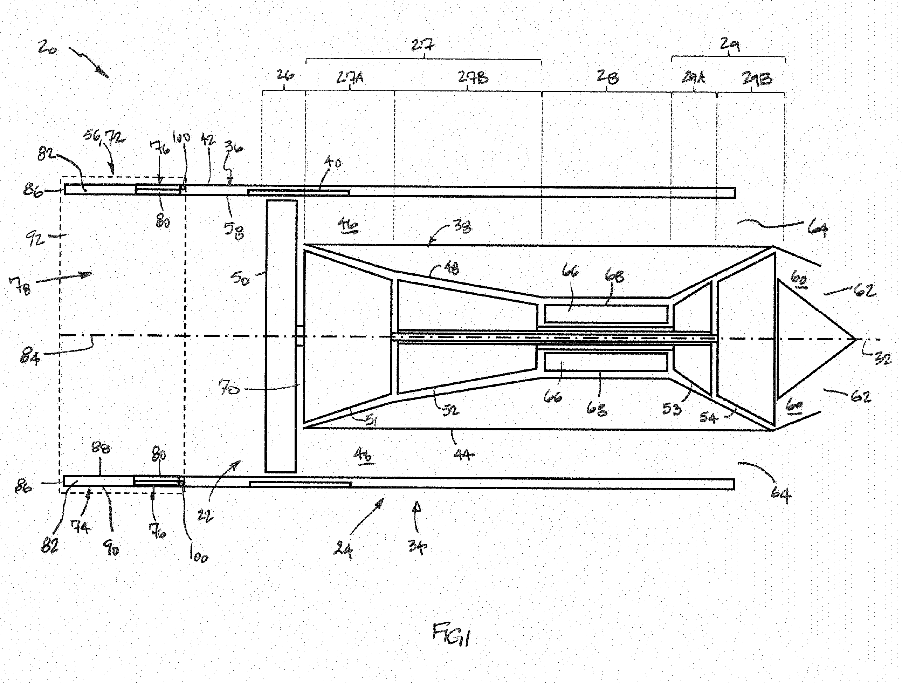

FIG. 1 is schematic illustration of a propulsion system 20 for an aircraft. Briefly, the aircraft may be an airplane, a drone (e.g., an unmanned aerial vehicle (UAV)) or any other manned or unmanned aerial vehicle. The aircraft propulsion system 20 includes a gas turbine engine 22 and a nacelle 24.

The gas turbine engine 22 may be configured as a turbofan engine. The gas turbine engine 22 of FIG. 1, for example, includes a fan section 26, a compressor section 27, a combustor section 28 and a turbine section 29. The compressor section 27 may include a low pressure compressor (LPC) section 27A and a high pressure compressor (HPC) section 27B. The turbine section 29 may include a high pressure turbine (HPT) section 29A and a low pressure turbine (LPT) section 29B.

The engine sections 26-29B may be arranged sequentially along an axial centerline 32 (e.g., a rotational axis) of the gas turbine engine 22 within an aircraft propulsion system housing 34. This propulsion system housing 34 includes an outer housing structure 36 and an inner housing structure 38.

The outer housing structure 36 includes an outer case 40 (e.g., a fan case) and an outer structure 42 of the nacelle 24; e.g., an outer nacelle structure. The outer case 40 houses at least the fan section 26. The outer nacelle structure 42 houses and provides an aerodynamic cover for the outer case 40. The outer nacelle structure 42 also covers a portion of an inner structure 44 of the nacelle 24; e.g., an inner nacelle structure, which may also be referred to as an inner fixed structure (IFS). More particularly, the outer nacelle structure 42 axially overlaps and extends circumferentially about (e.g., completely around) the inner nacelle structure 44. The outer nacelle structure 42 and the inner nacelle structure 44 thereby at least partially or completely form a (e.g., annular) bypass flowpath 46 within the aircraft propulsion system 20.

The inner housing structure 38 includes an inner case 48 (e.g., a core case) and the inner nacelle structure 44. The inner case 48 houses one or more of the engine sections 27A, 27B, 28, 29A and 29B, which engine sections 27A-29B may be collectively referred to as an engine core. The inner nacelle structure 44 houses and provides an aerodynamic cover for the inner case 48.

Each of the engine sections 26, 27A, 27B, 29A and 29B includes a bladed rotor 50-54. The fan rotor 50 and the LPC rotor 51 are connected to and driven by the LPT rotor 54 through a low speed shaft. The HPC rotor 52 is connected to and driven by the HPT rotor 53 through a high speed shaft. The shafts are rotatably supported by a plurality of bearings (not shown). Each of these bearings is connected to the aircraft propulsion system housing 34 (e.g., the inner case 48) by at least one stationary structure such as, for example, an annular support strut.

During operation, air enters the aircraft propulsion system 20 through an aircraft propulsion system inlet structure 56. This air is directed through an inlet duct 58 (e.g., a fan duct in the fan section 26) and into a (e.g., annular) core flowpath 60 and the bypass flowpath 46. The core flowpath 60 extends axially along the axial centerline 32 within the aircraft propulsion system 20, through the engine sections 27A-29B, to a core nozzle outlet 62, where the core flowpath 60 is radially within the inner case 48. The bypass flowpath 46 extends axially along the axial centerline 32 within the aircraft propulsion system 20 to a bypass nozzle outlet 64, where the bypass flowpath 46 is radially between the outer nacelle structure 42 and the inner nacelle structure 44. The air within the core flowpath 60 may be referred to as "core air". The air within the bypass flowpath 46 may be referred to as "bypass air".

The core air is compressed by the LPC rotor 51 and the HPC rotor 52 and directed into a combustion chamber 66 of a combustor 68 in the combustor section 28. Fuel is injected into the combustion chamber 66 through one or more fuel injectors and mixed with the compressed core air to provide a fuel-air mixture. This fuel-air mixture is ignited and combustion products thereof flow through and sequentially cause the HPT rotor 53 and the LPT rotor 54 to rotate. The rotation of the HPT rotor 53 and the LPT rotor 54 respectively drive rotation of the HPC rotor 52 and the LPC rotor 51 and, thus, compression of the air received from a core airflow inlet 70. The rotation of the LPT rotor 54 also drives rotation of the fan rotor 50, which fan rotor 50 propels bypass air through and out of the bypass flowpath 46. The aircraft propulsion system 20 of the present disclosure, however, is not limited to the exemplary gas turbine engine configuration described above.

Optimal mass flow requirements of the air entering the aircraft propulsion system 20 through the aircraft propulsion system inlet structure 56 may change depending upon one or more parameters. These parameters may include, but are not limited to, modes of operation, aircraft maneuvers and operating conditions. For example, where the aircraft flies at supersonic speeds, a first mass flow of the air may be directed through the aircraft propulsion system inlet structure 56 into the aircraft propulsion system 20. When the aircraft flies at subsonic speeds, a second mass flow of the air may be directed through the aircraft propulsion system inlet structure 56 into the aircraft propulsion system 20, where the second mass flow is greater than the first mass flow.

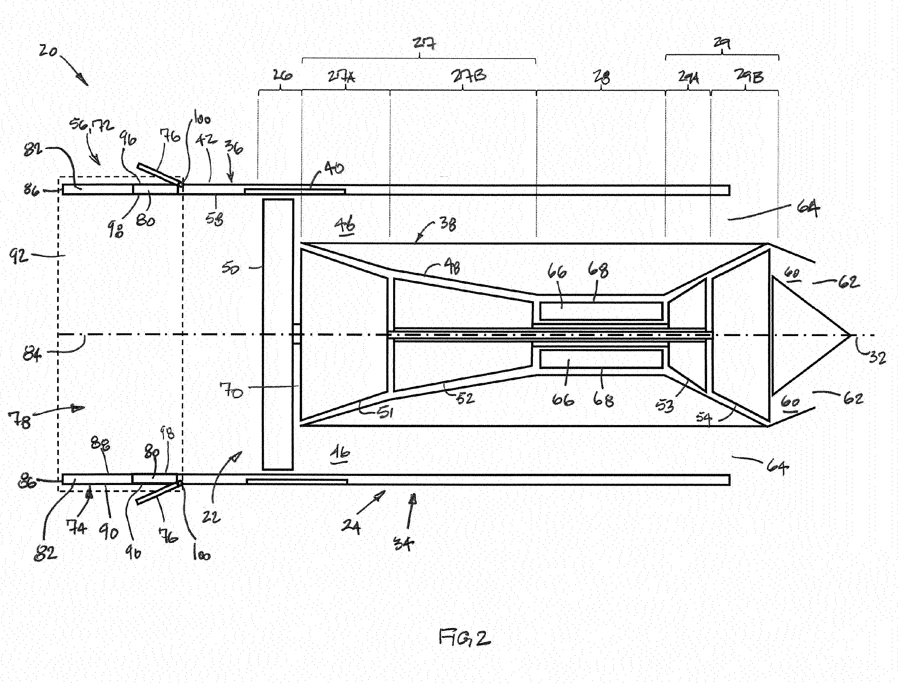

To accommodate the changing mass flow requirements for the aircraft propulsion system 20, the aircraft propulsion system inlet structure 56 is configured as a variable area inlet 72. Referring to FIG. 2, this variable area inlet 72 includes a stationary inlet structure 74, one or more movable (e.g., pivotable) inlet doors 76, an inner (e.g., central, primary) inlet passage 78 and one or more outer (e.g., side, auxiliary) inlet passages 80. Briefly, each inlet door 76 may be associated with a (e.g., single) respective one of the outer inlet passages 80. Similarly, each outer inlet passage 80 may be associated with a (e.g., single) respective one of the inlet doors 76.

Referring to FIGS. 1 and 2, the inlet structure 74 may be configured as a duct or another tubular body. The inlet structure 74 of FIGS. 1 and 2, for example, has a tubular sidewall 82. The inlet structure 74 and its sidewall 82 extend longitudinally along a longitudinal centerline 84 of the variable area inlet 72 to a leading edge 86 of the variable area inlet 72 / the inlet structure 74, where longitudinal centerline 84 may be an extension of / coaxial with the axial centerline 32. The inlet structure 74 and its sidewall 82 extend circumferentially about (e.g., completely around) around the longitudinal centerline 84. The inlet structure 74 and its sidewall 82 extend radially between and to an inner side 88 of the inlet structure 74 and an outer side 90 of the inlet structure 74.

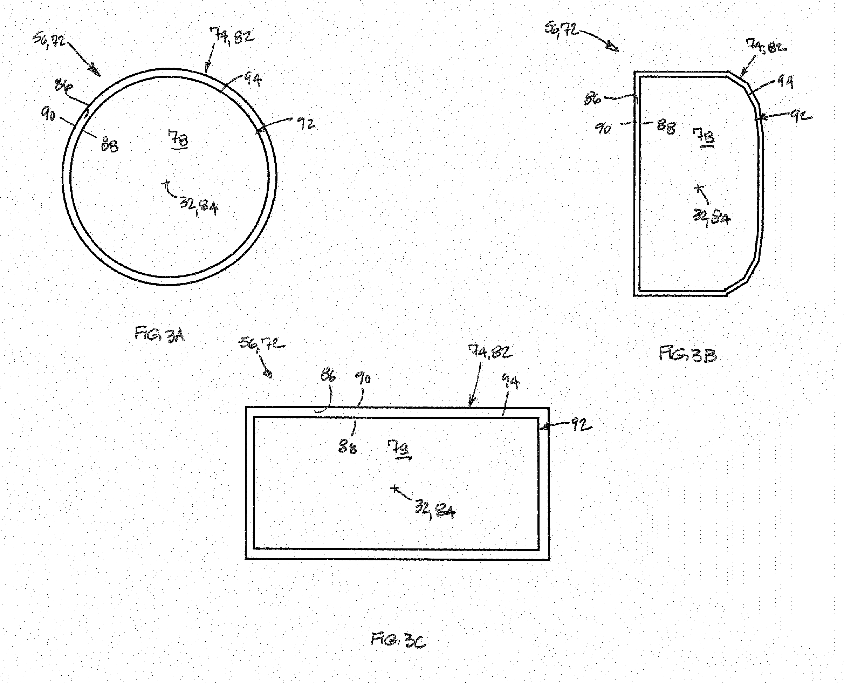

The inner inlet passage 78 extends longitudinally along the longitudinal centerline 84 within (e.g., through) the variable area inlet 72 and its inlet structure 74 from an inner inlet orifice 92 into the inner inlet passage 78 towards the gas turbine engine 22 and its fan section 26; e.g., to the inlet duct 58. The inner inlet passage 78 of FIGS. 1 and 2, for example, is configured as (or otherwise includes) an interior bore formed within the inlet structure 74 by the inlet structure inner side 88. The inner inlet orifice 92 is disposed at (e.g., on, adjacent or proximate) the leading edge 86. The inner inlet orifice 92 of FIGS. 1 and 2, for example, is formed by an inner skin of an inlet lip (e.g., a nose lip) of the inlet structure 74 at the leading edge 86. Referring to FIGS. 3A-C, the inner inlet orifice 92 has an outer perimeter 94 (e.g., an outer periphery of a cross-sectional geometry) when viewed in a reference plane, for example, perpendicular to the longitudinal centerline 84. Referring to FIG. 3A, the outer perimeter 94 may have curvilinear shape; e.g., circular shape, oval shape, a splined ring shape, etc. Referring to FIG. 3B, the outer perimeter 94 may alternatively have a D shape; e.g., a partially curvilinear and a partially polygonal shape. Referring to FIG. 3C, the outer perimeter 94 may alternatively be polygonal shaped. The present disclosure, however, is not limited to the foregoing exemplary inner inlet orifice perimeter geometries.

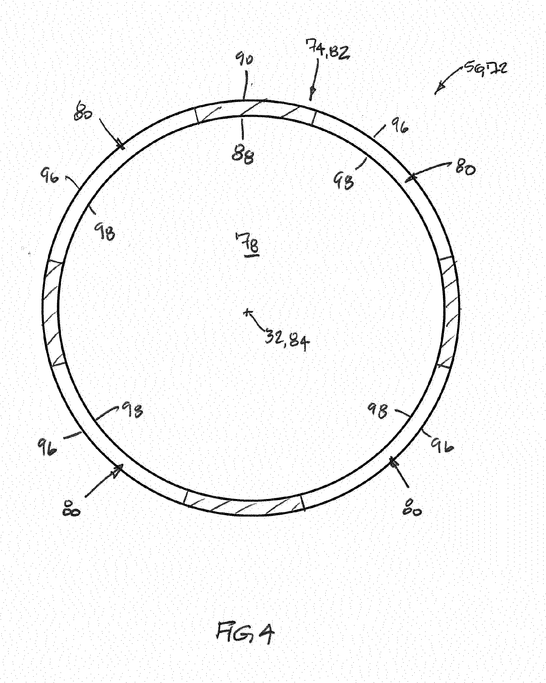

Referring to FIGS. 2 and 4, the outer inlet passages 80 are disposed circumferentially about the longitudinal centerline 84 and the inner inlet passage 78 in an array; e.g., a circular array. Each of the outer inlet passages 80 of FIG. 2 is aft and/or downstream of the leading edge 86. Each of the outer inlet passages 80, for example, is longitudinally spaced from the leading edge 86 and the inner inlet orifice 92 by a non-zero longitudinal distance. With such an arrangement, a (e.g., upstream and/or forward tubular) portion of the inlet structure 74 separates the inner inlet passage 78 from the outer inlet passages 80.

Each of the outer inlet passages 80 may be configured as a port in the inlet structure 74 and its sidewall 82. Each of the outer inlet passages 80, for example, may extend into the inlet structure 74 to the inner inlet passage 78. Each outer inlet passage 80 of FIG. 4, in particular, extends radially inward (e.g., in a direction towards the longitudinal centerline 84) from an outer inlet orifice 96 into that respective outer inlet passage 80, through the sidewall 82, to an outer outlet orifice 98 from that respective outer inlet passage 80. The outer inlet orifice 96 is disposed at and, more particularly, may be formed in a surface of the inlet structure 74 at its outer side 90. The outer outlet orifice 98 is disposed at and, more particularly, may be formed in a surface of the inlet structure 74 at its inner side 88. The outer outlet orifice 98 is adjacent an outer periphery of the inner inlet passage 78. Each outer inlet passage 80 may thereby be (e.g., directly) fluidly coupled with the inner inlet passage 78 through the respective outer outlet orifice 98.

Referring to FIGS. 1 and 2, the inlet doors 76 are arranged circumferentially about the longitudinal centerline 84 and the inner inlet passage 78 in an array; e.g., a circular array. Each of the inlet doors 76 is configured to move between a closed (e.g., stowed, inner and/or supersonic) position and an open (e.g., deployed, outer and/or subsonic) position; see also

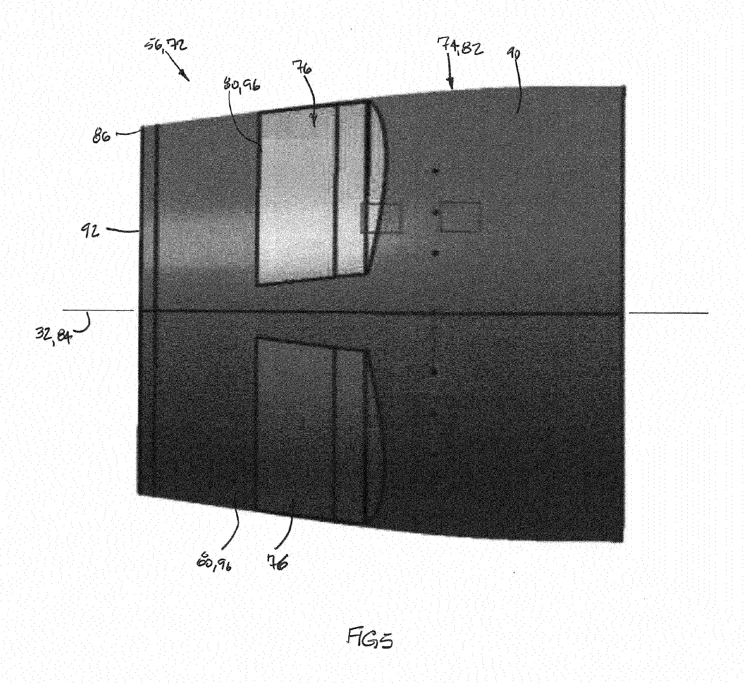

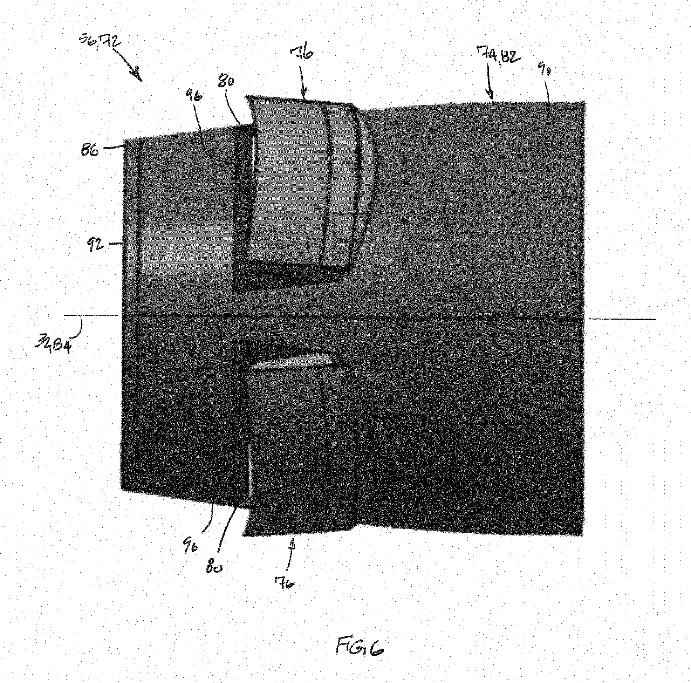

FIGS. 5 and 6. Each inlet door 76, for example, may be pivotally mounted to the inlet structure 74, or alternatively to another (e.g., fixed) structure of the aircraft propulsion system 20. Each of the inlet doors 76 of FIGS. 1 and 2, in particular, is pivotally attached to a respective portion of the inlet structure 74 by at least one hinge. Each inlet door 76 may thereby pivot radially outwards about a pivot axis 100 for the respective inlet door 76 from the closed position of FIGS. 1 and 5 to the open position of FIGS. 2 and 6. With such an arrangement, the variable area inlet 72 may reduce or eliminate overhung mass even when its inlet doors 76 are in their open positions compared to known variable area translating inlets.

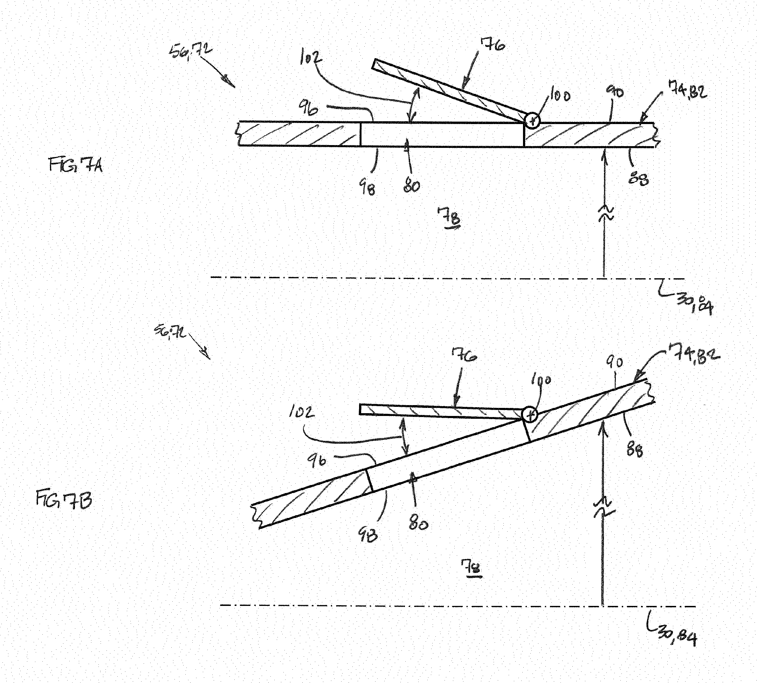

Referring to FIGS. 7A and 7B, a pivot angle 102 about the pivot axis 100 between the (e.g., fully) closed and the (e.g., fully) open positions (e.g., see FIGS. 1 and 2) may be an acute angle. The pivot angle 102, for example, may be greater than zero degrees (0°) and less than or equal to ten degrees (10°). In another example, the pivot angle 102 may be greater than ten degrees (10°) and less than or equal to twenty degrees (20°). In another example, the pivot angle 102 may be greater than twenty degrees (20°) and less than or equal to thirty degrees (30°). In still another example, the pivot angle 102 may be greater than thirty degrees (30°) and less than or equal to forty-five degrees (45°), etc. The present disclosure, however, is not limited to the foregoing exemplary pivot angles. However, providing a smaller pivot angle may induce less aerodynamic drag while still providing ram air.

When the inlet doors 76 are in their (e.g., fully) closed positions of FIGS. 1 and 5, each inlet door 76 is configured to (e.g., fully) close (e.g., cover, plug or otherwise obstruct and/or seal off) a respective one of the outer inlet passages 80 and its outer inlet orifice 96. With the variable area inlet 72 in this closed door arrangement, the variable area inlet 72 may have a first inlet area that is equal to (e.g., only including) an inlet area of the inner inlet orifice 92. The gas turbine engine 22 and its flowpath(s) 46 and/or 60 (see FIG. 1) may thereby (e.g., only) receive incoming air from the inner inlet orifice 92. By contrast, when the inlet doors 76 are in their (e.g., fully, or partial) open positions of FIGS. 2 and 6, each inlet door 76 is configured to (e.g., fully, or partially) open (e.g., uncover, unplug or otherwise facilitate access to) a respective one of the outer inlet passages 80 and its outer inlet orifice 96. With the variable area inlet 72 in this open door arrangement, the variable area inlet 72 may have a second (e.g., greater) inlet area that is equal to the inlet area of the inner inlet orifice 92 plus (e.g., frontal) inlet areas of the open outer inlet orifices 96. The gas turbine engine 22 and its flowpath(s) 46 and/or 60 (see FIG. 2) may thereby receive incoming air from each (e.g., open) outer inlet passage 80 and its outer inlet orifice 96 in addition to the incoming air from the inner inlet orifice 92. Each inlet door 76 may also operate as a scoop to provide forced (e.g., ram) air induction into the aircraft propulsion system 20. Thus, by moving (e.g., pivoting) between the closed positions of FIGS. 1 and 5 and the open positions of FIGS. 2 and 6, the variable area inlet 72 and its inlet doors 76 may selectively change the incoming air mass flow into the aircraft propulsion system 20.

While operation of the inlet doors 76 is discussed above as moving between the (e.g., fully) close position and the (e.g., fully) open position (e.g., see FIGS. 1 and 2), one, some or all of the inlet doors 76 may also (or may not) each move to and stop (or otherwise pause) at one or more intermediate positions (e.g., partially open positions) between the closed and the open positions. In this manner, the variable area inlet 72 may tailor the incoming air mass flow based on different conditions, aircraft speeds, maneuvers, etc.

The inlet doors 76 may be pivoted or otherwise moved between their open positions and their closed positions via one or more actuators (not shown). The actuator(s) may be electric motor(s), pneumatic drive(s) and/or hydraulic cylinder(s). These actuator(s) may be linear actuators or rotary actuators. The actuator(s) may be configured to move the inlet doors 76 in unison; e.g., concurrently, at common (the same) speeds, etc. Alternatively, the actuator(s) may be configured to move the inlet doors 76 in stages; e.g., at different times and/or at different speeds. In some embodiments, each inlet door 76 may be configured with its one dedicated actuator. In other embodiments, one or more actuators may be configured to move a common set of some or all of the inlet doors 76.

In some embodiments, each inlet door 76 may be configured with one or more (e.g., dedicated) locks to lock (e.g., a forward and/or upstream edge of) that inlet door 76 into one or more positions; e.g., the open position, the closed position and/or one or more intermediate positions. In addition or alternatively, the actuator(s) may include one or more integral locks for maintaining the position of the respective inlet door(s) 76.

In some embodiments, referring to FIGS. 1 and 2, the inlet doors 76 and the outer inlet passages 80 may be aligned along the longitudinal centerline 84. However, in other embodiments, one or more of the inlet doors 76 and the respective outer inlet passage(s) 80 may be misaligned (e.g., offset from) another one or more of the inlet doors 76 and the respective outer inlet passage(s) 80 along the longitudinal centerline 84.

In some embodiments, referring to FIG. 7A, one, some or all of the outer inlet passages 80 may each extend radially through the inlet structure sidewall 82. In other embodiments, referring to FIG. 7B, one, some or all of the outlet inlet passages may also (or alternatively) each extend longitudinally (e.g., axially) through the inlet structure sidewall 82.

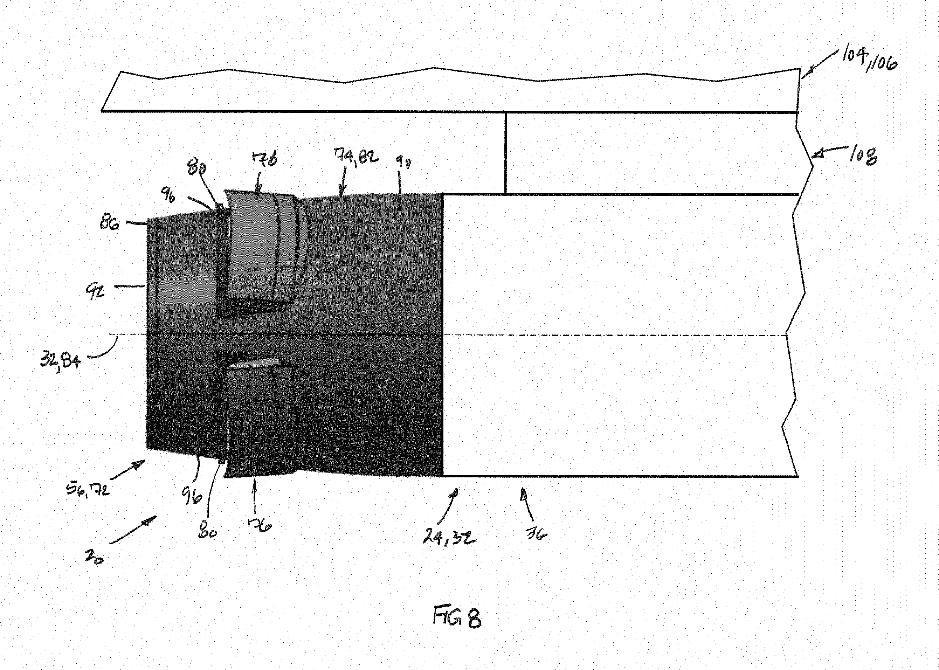

In some embodiments, referring to FIG. 8, the aircraft propulsion system 20 may be arranged exterior of an airframe 104 of the aircraft. The aircraft propulsion system 20, for example, may be located outside of the aircraft airframe 104, and mounted to an exterior of the aircraft airframe 104. The aircraft propulsion system 20 of FIG. 8, in particular, is mounted to a component 106 of the aircraft airframe 104 by a mount 108 (e.g., a pylon) which extends laterally between (e.g., and completely separates) the aircraft propulsion system 20 and the aircraft airframe 104. Examples of the airframe component 106 include, but are not limited to, a wing and a fuselage. With such an arrangement, the variable area inlet 72 is configured discrete (e.g., remote, spaced, etc.) from the aircraft airframe 104 and its airframe component 106. The inlet doors 76 and the respective outer inlet passages 80 may thereby be distributed (e.g., uniformly, symmetrically, etc.) about the centerline 32, 84. The gas turbine engine 22 and its fan section 26 (see FIG. 2) may thereby receive a relatively even distribution of incoming air.

In some embodiments, a command to open or close the inlet door(s) 76 may be provided with one or more redundancies and/or safety measures. The command may be issued (e.g., generated) using an open-loop control system or a closed-loop control system. Movement of the inlet doors 76 may be triggered based on one or more parameters. Examples of these parameters include, but are not limited to: position of the aircraft (e.g., on ground, in air); airspeed of the aircraft; fan pressure input; aircraft speed; and operator input (e.g., a command from a pilot). Actuation of the inlet doors 76 may also or alternatively be based on system health. For example, if it is determined one or more of the inlet doors 76 cannot close, the control system may prevent (or warn against) operating the aircraft at certain or any supersonic speeds. Conversely, if it is determined one or more of the inlet doors 76 cannot open, the control system may prevent (or warn against) proceeding to takeoff where the aircraft is still on ground.

The aircraft propulsion system 20 and its variable area inlet 72 may be configured with various gas turbine engines other than the exemplary one described above with respect to FIGS. 1 and 2. The gas turbine engine, for example, may be configured as a geared engine or a direct drive engine. The gas turbine engine may be configured with a single spool, with two spools (e.g., see FIGS. 1 and 2), or with more than two spools. The gas turbine engine may be configured as a turbofan engine, a turbojet engine or any other type of turbine engine. The present invention therefore is not limited to any particular types or configurations of gas turbine engines. The present disclosure is also not limited to applications where the aircraft is capable to traveling supersonic speeds. The variable area inlet 72, for example, may be utilized at subsonic speeds to, for example, increase ram air intake for certain flight conditions and/or aircraft maneuvers.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft, comprising:
a variable area inlet (72) for an aircraft propulsion system (20), the variable area inlet (72) including an inlet structure (74), an inlet door (76), an inner inlet passage (78) and an outer inlet passage (80);
the inlet door (76) configured to move outward from a closed position to an open position, the inlet door (76) configured to close the outer inlet passage (80) when the inlet door (76) is in the closed position, and the inlet door (76) configured to open the outer inlet passage (80) when the inlet door (76) is in the open position;
the inner inlet passage (78) extending into the variable area inlet (72) from a leading edge (86) of the inlet structure (74); and
the outer inlet passage (80) extending into the inlet structure (74) to the inner inlet passage (78).

2. The assembly of claim 1, wherein the inlet door (76) is configured to pivot a pivot angle (102) about a pivot axis (100) from the closed position to the open position, and optionally the pivot angle (102) is an acute angle.

3. The assembly of claim 1 or 2, wherein the inlet door (76) is pivotally mounted to the inlet structure (74).

4. The assembly of claim 1, 2 or 3, wherein the inlet door (76) is configured to form a scoop that directs air into the outer inlet passage (80) when the inlet door (76) is in the open position.

5. The assembly of any preceding claim, wherein the inlet door (76) is spaced downstream and/or aft from an inlet orifice (92) into the inner inlet passage (78).

6. The assembly of any preceding claim, wherein the inlet door (76) is configured to cover an inlet orifice (96) into the outer inlet passage (80) when the inlet door (76) is in the closed position, and uncover the inlet orifice (96) into the outer inlet passage (80) when the inlet door (76) is in the open position.

7. The assembly of any of claims 1 to 5, wherein the inlet door (76) is configured to plug an inlet orifice (96) into the outer inlet passage (80) when the inlet door (76) is in the closed position, and unplug the inlet orifice (96) into the outer inlet passage (80) when the inlet door (76) is in the open position.

8. The assembly of any preceding claim, wherein an/the inlet orifice (92) into the inner inlet passage (78) is formed by the inlet structure (74) at the leading edge (86) of the inlet structure (74), and an/the inlet orifice (96) into the outer inlet passage (80) is formed by the inlet structure (74) downstream from the leading edge (86) of the inlet structure (74), or
wherein an/the inlet orifice (96) into the outer inlet passage (80) is axially spaced from an/the inlet orifice (92) into the inner inlet passage (78).

9. The assembly of any preceding claim, wherein the inner inlet passage (78) extends axially into the variable area inlet (72) from the leading edge (86) of the inlet structure (74).

10. The assembly of any preceding claim, wherein the outer inlet passage (80) extends radially and/or axially through a sidewall (82) of the inlet structure (74) to the inner inlet passage (78).

11. The assembly of any preceding claim, wherein the inner inlet passage (78) comprises a bore of the inlet structure (74), and/or the outer inlet passage (80) comprises a port in the inlet structure (74).

12. The assembly of any preceding claim, further comprising a gas turbine engine (22), the gas turbine engine (22) comprising a core flowpath (60), the core flowpath (60) configured to receive air from the inner inlet passage (78) and the outer inlet passage (80) when the inlet door (76) is in the open position, and/or the gas turbine engine (22) comprising a bypass flowpath (46), the bypass flowpath (46) configured to receive air from the inner inlet passage (78) and the outer inlet passage (80) when the inlet door (76) is in the open position.

13. The assembly of any preceding claim, wherein:
the variable area inlet (72) further includes a second inlet door (76) and a second outer inlet passage (80);
the second inlet door (76) is configured to move outward from a closed position to an open position, the second inlet door (76) is configured to close the second outer inlet passage (80) when the second inlet door (76) is in the closed position, and the second inlet door (76) is configured to open the second outer inlet passage (80) when the second inlet door (76) is in the open position; and
the second outer inlet passage (80) extends into the inlet structure (74) to the inner inlet passage (78),
optionally wherein the inlet door (76) and the second inlet door (76) are aligned along a centerline (84) of the variable area inlet (72).

14. The assembly of claim 13, wherein the inlet door (76) and the second inlet door (76) are configured to move in unison from the closed positions to the open positions, or to independently move from the closed positions to the open positions.

15. The assembly of any preceding claim, further comprising:
an aircraft airframe (104); and
an aircraft propulsion system (20) exterior to and laterally spaced from the aircraft airframe (104), the aircraft propulsion system (20) comprising the variable area inlet (72).
